# EUROPÄISCHE PATENTSCHRIFT

(11) **EP 3 105 629 B1**
(45) Veröffentlichungstag und Bekanntmachung des Hinweises auf die Patenterteilung: **28.10.2020**
(21) Anmeldenummer: 15703968.6
(22) Anmeldetag: 09.02.2015
(51) Int. Cl.: G02B 21/00, G02B 21/36, G02B 27/00

(54) **MULTIFOKALES FLUORESZENZRASTERMIKROSKOP**
MULTIFOCAL SCANNING FLUORESCENCE MICROSCOPE
MICROSCOPE À BALAYAGE À FLUORESCENCE MULTIFOCALE

(30) Priorität: 12.02.2014 DE 102014002328
(43) Veröffentlichungstag der Anmeldung: 21.12.2016
(73) Patentinhaber: Carl Zeiss Microscopy GmbH, 07745 Jena (DE); Carl Zeiss SMT AG, 73447 Oberkochen (DE)
(72) Erfinder: ANHUT, Tiemo, 07745 Jena (DE); SCHWEDT, Daniel, 07745 Jena (DE); WALD, Matthias, 07751 Jena (DE)
(74) Vertreter: Loritz, Rainer
(86) Internationale Anmeldenummer: PCT/EP2015/052605
(87) Internationale Veröffentlichungsnummer: WO 2015/121188

(56) Entgegenhaltungen:
- DE-A1- 10 356 416
- US-A1- 2013 176 622
- PAUL A. DALGARNO ET AL: "Multiplane imaging and three dimensional nanoscale particle tracking in biological microscopy", OPTICS EXPRESS, Bd. 18, Nr. 2, 18. Januar 2010 (2010-01-18), Seite 877, XP055123803, ISSN: 1094-4087, DOI: 10.1364/OE.18.000877
- BLANCHARD P M ET AL: "SIMULTANEOUS MULTIPLANE IMAGING WITH A DISTORTED DIFFRACTION GRATING", APPLIED OPTICS, OPTICAL SOCIETY OF AMERICA, WASHINGTON, DC; US, Bd. 38, Nr. 32, 10. November 1999 (1999-11-10), Seiten 6692-6699, XP000893705, ISSN: 0003-6935, DOI: 10.1364/AO.38.006692
- TUCKER S C ET AL: "Extended depth of field and aberration control for inexpensive digital microscope systems", OPTICS EXPRESS, OSA (OPTICAL SOCIETY OF AMERICA), WASHINGTON DC, (US), Bd. 4, Nr. 11, 1. Januar 1999 (1999-01-01) , Seiten 1-8, XP002394774, ISSN: 1094-4087, DOI: 10.1364/OE.4.000467

## Beschreibung

Die Erfindung betrifft ein Fluoreszenzrastermikroskop mit einem optischen System, das einen mikroskopischen Beobachtungsstrahlengang von einem Messvolumen bis zu einer Bildebene definiert und (in Richtung vom Messvolumen zur Bildebene hin aufgezählt) ein Mikroskopobjektiv, einen Strahlvereiniger mit einem Eingang zur Ankopplung eines Beleuchtungssystems und eine in der Bildebene angeordnete Blende umfasst, wobei das optische System zwischen dem Mikroskopobjektiv und dem Strahlvereiniger eine verstellbare Strahlablenkeinheit zum sequentiellen Abtasten unterschiedlicher Messvolumina und eine Übertragungsoptik zum Abbilden der Ablenkeinheit in eine Pupille des Mikroskopobjektivs aufweist. Die Blende wird nachfolgend als konfokale Blende bezeichnet. Zweckmäßigerweise kann das Mikroskop auch ein Beleuchtungssystem mit einer Lichtquelle, vorzugsweise mindestens einem Laser, umfassen.

Konfokale Fluoreszenzrastermikroskope, beispielsweise gemäß DE 197 02 753 A1, haben sich in den sogenannten Lebenswissenschaften zu einem unverzichtbaren Werkzeug entwickelt. Der Bildaufbau erfolgt in der Regel so, dass ein einzelnes beugungsbegrenztes Fokusvolumen (das Messvolumen), definiert durch eine dreidimensionale Punktbildfunktion (engl. "point spread function"; PSF), die Probe sequentiell abrastert. Außerfokales Fluoreszenzlicht wird an der konfokalen Blende vom fokalen Fluoreszenzlicht, dem Nutzsignal, abgetrennt. Dies führt zu einer Bildgebung mit der Eigenschaft eines optischen Schnittes, so dass nur Fluoreszenzlicht aus der Fokalebene zum Messsignal beiträgt. Dadurch ist eine sogenannte unschärfefreie (engl. "blur-free") Abbildung auch optisch dickerer und leicht streuender Proben möglich. Die Dicke des optischen Schnittes hängt dabei von der Größe der konfokalen Blendenöffnung ab und ist nach unten nur durch das beugungsbedingte Auflösungsvermögen begrenzt.

Der rasternde, sequentielle Bildaufbau hat jedoch auch Nachteile. So ist der Bildaufbau relativ langsam, um durch Akkumulieren von genügend Fluoreszenzphotonen pro Pixel ein ausreichendes Signal-Rausch-Verhältnis (engl. "signal-to-noise ratio"; SNR) erreichen zu können. Ein weiteres Problem ist das Ausbleichen der Probe. Anregungslicht wird stets auch in dem sich zum Fokusvolumen hin verjüngenden Lichtkonus deponiert. Die damit angeregte außerfokale Fluoreszenzemission wird aber nicht zur konfokalen Abbildung genutzt, sondern an der konfokalen Detektionsblende zwecks optischen Schnittes gezielt diskriminiert. Durch den außerfokalen Lichteintrag wird also ausschließlich die Probe belastet. Dabei bleicht diese aufgrund der Nichtlinearität des Bleichvorgangs vor allem in der Nähe des Fokalebene aus. Um die Pixelverweilzeit und damit die Bildaufnahme insgesamt zu verkürzen, ist es üblich, die Anregungsintensität zu steigern. Das führt jedoch zu einer erhöhten Probenbelastung und infolgedessen zu starkem Bleichen und Photoschäden.

Eine Möglichkeit, die Probenbelastung zu verringern, besteht darin, die Bildaufnahme zu parallelisieren. Dies gelingt zum Beispiel wie in US 5,239,178 oder US 6,028,306 mit N separaten, gleichzeitig beleuchteten und gemessenen Messvolumina (vereinfacht als Messpunkte bezeichnet) in der Fokalebene. Hiermit kann die Probe mit weniger Intensität pro Beleuchtungsstrahl zur gleichen Zeit an N Punkten vermessen werden. Die Beleuchtungsintensität wird dabei um den Faktor 1/N gesenkt und die Pixelverweilzeit um den Faktor N verlängert, so dass die Bildwiederholrate (engl. "frame rate") identisch und das SNR vergleichbar mit der gerasterten Aufnahme mittels eines einzelnen Messvolumens sind. Zwar ist die in die Probe eingetragene Energiedosis dieselbe, sie ist jedoch räumlich verteilt, so dass das Risiko einer probenschädigenden Sättigung der Fluoreszenz verringert werden kann. Eine vielfach parallele Bildaufnahme mit denselben Vorteilen gelingt auch mittels einer rotierenden Nipkow-Scheibe oder mit linienförmiger Abtastung.

Andererseits kann durch parallele Abbildung mehrerer Messpunkte die notwendige Bildaufnahmedauer verringert werden, so dass beispielsweise bei wiederholter Aufnahme die maximal mögliche Bildwiederholfrequenz höher ist. Dies erfordert jedoch wie oben beschrieben eine erhöhte Anregungsintensität.

Alternativ zur simultanen Abbildung mehrerer Messpunkte aus derselben Fokusebene ist es möglich, Messpunkte auch aus zur Fokalebene (nachfolgend auch als primäre Fokalebene bezeichnet) parallelen, unterschiedlich weit vom Mikroskopobjektiv entfernten Ebenen (nachfolgend als sekundäre Fokalebenen bezeichnet) simultan abzubilden und jeweils quasi-konfokal zu detektieren.

Im Stand der Technik ist eine solche axial-multifokale Abbildung aus DE 103 56 416 A1 für den Sonderfall der monochromatischen konfokalen Mikroskopie bekannt. Dort wird ein multifokales Abbildungssystem in Form eines optisch dezentrierten diffraktiv-optischen Elementes (DOE), beispielsweise einem Phasengitter, mit einer Sammeloptik zur simultanen Abbildung mehrerer auf der optischen Achse des Mikroskopobjektivs liegender separater Messvolumina genutzt. Wellenfronten aus unterschiedlich vom Objektiv entfernten Probenebenen (primäre und sekundäre Fokalebenen) weisen am DOE unterschiedliche Krümmungen auf. Sie werden von dem DOE auf unterschiedliche Beugungsordnungen verteilt und vorteilhafterweise in dieselbe Ebene (in der die konfokale Blende angeordnet ist) fokussiert. Dabei werden andere Wellenlängen als die Beleuchtungswellenlänge an der Blende diskriminiert. Dadurch ist dieses Mikroskop nur zur monochromatischen Abbildung geeignet. In Fluoreszenzmessungen hingegen ist aufgrund der Stokes-Verschiebung und der spektralen Verteilung von Fluoreszenzemission eine große spektrale Bandbreite zu detektieren. Das Mikroskop gemäß DE 103 56 416 A1 kann daher nicht zur Fluoreszenzmessung und insbesondere nicht zur spektralen Bildgebung eingesetzt werden, sondern nur für Reflexionsmessungen, beispielsweise in der Materialmikroskopie.

Der Erfindung liegt die Aufgabe zugrunde, ein Fluoreszenzrastermikroskop der eingangs genannten Art so zu verbessern, dass simultan Fluoreszenz aus unterschiedlichen Fokalebenen (der primären und sekundären) jeweils quasi-konfokal detektiert werden kann.

Die Aufgabe wird gelöst durch ein Fluoreszenzrastermikroskop, welches die in Anspruch 1 angegebenen Merkmale aufweist.

Vorteilhafte Ausgestaltungen der Erfindung sind in den Unteransprüchen angegeben.

Erfindungsgemäß umfasst das optische System im Beobachtungsstrahlengang zwischen dem Strahlvereiniger und der Bildebene eine erste diffraktive Optik zur Aufspaltung von Lichtstrahlen in (refokussierte) Strahlenbündel längs unterschiedlicher Beugungsordnungen, wobei sie den Lichtstrahlen jeder Beugungsordnung eine von den anderen Beugungsordnungen verschiedene sphärische Phase, insbesondere ein jeweiliges ganzzahliges Vielfaches einer (vorgegebenen) sphärischen Phase, aufprägt, eine zweite diffraktive Optik zur Kompensation (durch die erste diffraktive Optik erzeugter) chromatischer Aberrationen der aufgespalteten Strahlenbündel und eine Sammeloptik zur Fokussierung der aufgespalteten Strahlenbündel in die Bildebene, so dass eine Reihe verschiedener (objektseitig) auf der optischen Achse des Mikroskopobjektivs oder auf einer zu dieser parallelen Achse angeordneter (disjunkter) Messvolumina simultan (entlang den unterschiedlichen Beugungsordnungen der diffraktiven Optik) in die Bildebene abbildbar sind. "Objektseitig" ist dabei gleichbedeutend mit "auf einer von der Bildebene abgewandten Seite des Mikroskopobjektivs".

Die erste diffraktive Optik refokussiert Wellenfronten von Lichtstrahlen aus unterschiedlichen Fokalebenen vorzugsweise derart, dass sie eine jeweilige ebene Wellenfront aufweisen, wobei die jeweilige Ausbreitungsrichtung (Wellenvektor) jeder refokussierten Wellenfront einer der Beugungsordnungen entspricht. Die diffraktive Optik kann beispielweise ein DOE sein. Vorzugsweise ist die erste diffraktive Optik ein zweidimensionales Phasengitter. Die zweite diffraktive Optik ist zweckmäßigerweise zwischen der ersten diffraktiven Optik und der Sammeloptik angeordnet. Sie kann beispielsweise als Gitter ausgebildet sein. Durch die zweite diffraktive Optik können alle Wellenlängen durch die Öffnung(en) der konfokalen Blende geleitet werden. Selbstverständlich können dabei durch Übertragungsoptiken vor und/oder hinter der konfokalen Blende eine oder mehrere Zwischenbildebenen erzeugt werden, bevor das Licht detektiert wird. Eine zweite diffraktive Optik zur Korrektur chromatischer Aberrationen von refokussierten aufgespalteten Strahlenbündeln ist beispielsweise in "Fast multicolor 3D imaging using aberrationcorrected multifocus microscopy" (Abrahamsson et al. in "Nature Methods", Band 10, Nr. 1, S. 60) unter der Bezeichnung "CCG" beschrieben.

Durch die entfernungsabhängige, farbunabhängige Aufspaltung des Lichts aus den verschiedenen (primäre und sekundären) Fokalebenen kann auch außerfokale Fluoreszenz quasi-konfokal abgebildet und simultan detektiert werden. Das verringert die Probenbelastung, indem das eingetragene Anregungslicht besser ausgenutzt wird. Insbesondere braucht auch für mehrere Messpunkte nur ein einzelnes Beleuchtungsvolumen und damit auch nur ein einzelner vorgelagerter Konus angeregt zu werden.

Vorzugsweise ist darüber hinaus außerhalb des Beobachtungsstrahlengangs vor dem Strahlvereinigereingang zur Ankopplung des Beleuchtungssystems eine Optik zum Erweitern (Verlängern) einer (objektseitigen) Fokustiefe (Fokusausdehnung) des Mikroskopobjektivs längs dessen optischer Achse angeordnet. Durch die Position außerhalb (des optischen Systems) des Beobachtungsstrahlengangs wird nur die Ausdehnung des Beleuchtungsvolumens, nicht aber die Ausdehnung der Messvolumina, die an verschiedenen Stellen des Beleuchtungsvolumens liegen, beeinflusst. Durch die Optik zum Erweitern der Fokustiefe wird das axiale Auflösungsvermögen verringert, die maximale Auflösung in Beleuchtungsrichtung also künstlich verschlechtert. Aufgrund der auf diese Weise erweiterten Fokustiefe (engl. "extended depth of field"; EDOF) des Beleuchtungsvolumens können mehr Messvolumina simultan mit identischer Lichtleistung angeregt werden. Zudem können die Fokalebenen und damit die Messvolumina axial weiter voneinander beabstandet sein, so dass sie optisch besser voneinander getrennt werden können.

In DE 103 56 416 A1 ist eine Hintereinanderschaltung von zwei gekreuzten Phasengittern vorgesehen, um eine größere Anzahl axialer Messvolumina simultan abbilden zu können. Diese Art der zweidimensionalen Aufspaltung der Beugungsordnungen und damit auch der Abbildungen der Messvolumina hat jedoch den Nachteil, lichtschwach zu sein. Damit ist sie für die Fluoreszenzmikroskopie ungeeignet.

Besonders vorteilhaft sind daher Ausführungsformen, in denen das (zweidimensionale) Phasengitter vom Mikroskopobjektiv kommende Wellenfronten in (2m+1)² Beugungsordnungen mit m=1,2,3,... über zwei verschiedene Raumrichtungen aufspaltet. Auf diese Weise sind die aufgespalteten Strahlenbündel in der Detektorebene als quadratische (2m+1)x(2m+1)-Matrix angeordnet und eine große Anzahl von Ebenen kann mittels einer zweidimensionalen Detektormatrix mit geringem Aufwand simultan aufgenommen (optoelektronisch gewandelt) werden. Die zweidimensionale Aufspaltung durch eine einzelne diffraktive Optik ist lichtstark und ermöglicht so eine vielfach-axial-multifokale, probenschonende Aufnahme von Fluoreszenzlicht.

Für eine erste vorteilhafte Ausgestaltungsvariante ist vorgesehen, dass die (konfokale) Blende (genau) eine Öffnung aufweist und die Sammeloptik jedes der aufgespalteten Strahlenbündel der verschiedenen Beugungsordnungen auf diese (gemeinsame) Öffnung fokussiert. Die Detektoren können beispielsweise derart beabstandet hinter der Blende angeordnet sein, dass die (optischen Achsen der) Strahlenbündel mindestens um eine der Entfernung zwischen den Detektoren entsprechende Distanz auseinandergelaufen sind bis sie auf die Detektoren treffen. Alternativ können sie in einer weiteren Bildebene angeordnet sein.

Für eine zweite vorteilhafte Ausgestaltungsvariante ist vorgesehen, dass die (konfokale) Blende für jede der aufgespalteten Beugungsordnungen oder zumindest für eine Untermenge der aufgespalteten Beugungsordnungen eine jeweilige Öffnung aufweist und die Sammeloptik jedes der aufgespalteten Strahlenbündel der verschiedenen Beugungsordnungen auf die betreffende Öffnung fokussiert. Die Detektoren können beispielsweise (unmittelbar) hinter den Öffnungen der konfokalen Blende oder in einer weiteren Bildebene angeordnet sein.

Vorzugsweise ist hinter der konfokalen Blende jeweils mindestens ein Detektor für jede der Beugungsordnungen angeordnet. Die Detektoren sind vorzugsweise mit hohen Wiederholfrequenzen von mindestens 100 kHz auslesbar und vorzugsweise zur Einzelphotonendetektion geeignet. Beispielsweise kann es sich bei der Gesamtmenge aller Detektoren um eine Matrix von Einzelphotonenlawinendioden (engl. "single-photon avalanche diode"; SPAD) handeln, die beispielsweise im Geigermodus betrieben werden, wie in "Single-photon imaging" von Seitz in "Springer series in Optical sciences", Band 160, beschrieben. Jede einzelne Diode oder eine jeweilige, entsprechend zugeordnete Untergruppe von Einzeldioden ist dann ein (unabhängig von den anderen auslesbarer) Detektor im Sinne der Erfindung. Die Anzahl der Detektoren ist dann beispielsweise größer als die Anzahl von Strahlenbündeln. Anstelle von SPAD können die Detektoren eine zweidimensionale Matrix in Form eines Multianoden-Photovervielfachers ausgeführt sein, wobei die Anzahl der Detektoren der Anzahl (2m+1)² der Strahlenbündel entspricht. Alternativ kann hinter jeder Öffnung der konfokalen Blende eine separate Matrix von Detektoren angeordnet sein, beispielsweise jeweils eine SPAD-Matrix. Es kann vorteilhaft sein, wenn das optische System mindestens eine Optik zum Erzeugen einer weiteren Bildebene umfasst. In dieser können dann die Detektoren angeordnet sein.

Die Erfindung hat den besonderen Vorteil, dass jedes Strahlenbündel zumindest der von Null verschiedenen Beugungsordnungen, optional auch der nullten Beugungsordnung, durch das optische System zusätzlich in sich räumlich-spektral aufgespaltet werden kann, bevor es auf die Detektoren trifft. Zu diesem Zweck kann vorteilhafterweise in dem optischen System zwischen der Bildebene und der weiteren Bildebene mindestens ein spektral dispersives Element derart angeordnet sein, dass für die aufgespalteten Strahlenbündel zumindest der von Null verschiedenen Beugungsordnungen verschiedene Wellenlängen auf unterschiedliche Orte der weiteren Bildebene fokussiert werden. Dabei kann das mindestens eine dispersive Element in einem kollimierten Strahlengangabschnitt der Übertragungsoptik angeordnet sein.

Durch eine derartige räumlich-spektrale Aufspaltung eines Strahlenbündels über mehrere Detektoren kann das Messvolumen, aus dem das betreffende Bündel stammt, spektral aufgelöst detektiert werden. Dadurch stehen zusätzliche Informationen über das Messvolumen zur Verfügung. Vorzugsweise ist im Beobachtungsstrahlengang nach dem dispersiven Element für jede Beugungsordnung jeweils eine Gruppe aus mehreren Detektoren angeordnet ist. Die Gruppen sind zweckmäßigerweise disjunkt. Jede Detektorgruppe ist dabei eineindeutig einem jeweiligen Messvolumen zugeordnet. Jeder Detektor einer Detektorgruppe entspricht dabei einem spektralen Kanal des betreffenden Messvolumens. Insbesondere können so mehrere unterschiedliche Fluoreszenzfarbstoffe simultan detektiert und identifiziert werden, beispielsweise mittels Entmischung (engl. "unmixing") oder Hauptkomponentenanalyse (engl. "principal component analysis"; PCA). Dadurch können Fluoreszenzmarker unterschiedlicher Art simultan lokalisiert werden.

Als spektral dispersives Element können beispielsweise ein oder mehrere Prismen (beispielsweise eines pro aufgespaltetem Strahlbündel/Beugungsordnung, optional auch in der nullten Beugungsordnung) oder ein oder mehrere Beugungsgitter (beispielsweise eines pro aufgespaltetem Strahlbündel/Beugungsordnung, optional auch in der nullten Beugungsordnung) eingesetzt werden.

Vorzugsweise ist das spektral dispersive Element in einer zur Pupillenebene des Mikroskopobjektivs konjugierten Ebene angeordnet. Da in der Pupillenebene ein Schnittpunkt der fokussierten aufgespalteten, chromatisch korrigierten Lichtstrahlenbündel liegt, können mit nur einem einzelnen dispersiven Element geringen Bauraums alle Lichtstrahlenbündel räumlich-spektral aufgespaltet werden.

Zweckmäßigerweise können in allen Ausführungsformen mindestens ein, vorzugsweise aber alle spektral dispersiven Elemente zum reversiblen Entfernen aus dem Beobachtungsstrahlengang beweglich gelagert sein, beispielsweise zu Kalibrierzwecken.

Vorteilhaft sind Ausführungsformen, in denen die Optik zum Erzeugen einer erweiterten Fokustiefe eine Phasenplatte, insbesondere eine kubische Phasenmodulationsmaske oder Mittel zum Erzeugen von Besselstrahlen, insbesondere jeweils angeordnet in einer zur Pupillenebene des Mikroskopobjektivs konjugierten Ebene, umfasst und/oder zum Unterfüllen der Pupille des Mikroskopobjektivs ausgebildet ist, insbesondere durch Strahlformen, insbesondere zum Verringern eines Strahlquerschnitts von kollimiertem Licht. Kubische Phasenmodulationsmasken zum Erzeugen einer erweiterten Fokustiefe sind beispielsweise in "Extended depth of field through wave-front coding" (Dowski/Cathey in "Applied Optics", Band 34, Nr. 11, S. 1859) beschrieben. Eine Optik zum Unterfüllen der Pupille kann beispielsweise ein den Strahlquerschnitt in der Pupille verringernder Strahlformer sein. Die Unterfüllung der Pupille führt zur Verringerung der numerischen Apertur der Beleuchtung, woraus sich ein verschlechtertes axiales Auflösungsvermögen ω_{z} ergibt.

Zum Erzeugen eines axial verlängerten Beleuchtungsvolumens kann auch jede andere bekannte EDOF-artige Optik verwendet werden, beispielsweise durch Einbringen von Phasen- oder Blendenmasken in einer Pupille des Beleuchtungsstrahlenganges, um Besselstrahlen zu erzeugen wie in "Experimental investigation of Bessel beam characteristics" (Y. Lin in "Applied Optics", Band 31, S. 2708) oder dem Beleuchtungslicht einen kubischen Phasenverlauf aufzuprägen entsprechend "Extended depth of field through wave-front coding" (Dowski/Cathey in "Applied Optics", Band 34, Nr. 11, S. 1859). Weiterhin kann eine Lichtquelle oder eine der Lichtquelle nachgeschaltete Optik vorteilhaft sein, die eine den Messvolumina entsprechende Punktreihe axial aufspannt, beispielsweise wie in DE 103 56 416 A1 mit Bezugszeichen 11 beschrieben. Der Vorteil liegt in der besseren Auflösung in jeder axialen Fokusebene, weil hier jeweils eine volle Konfokalität erzielt werden kann. Der Nachteil ist eine ausgedehntere Beleuchtung der Probe mit entsprechend höherer Belastung.

Vorzugsweise erzeugt die Optik zum Erweitern der Fokustiefe ein Beleuchtungsvolumen, dessen axiale Ausdehnung mindestens ein Fünffaches, insbesondere mindestens Zehnfaches, weiter insbesondere mindestens Zwanzigfaches, seiner lateralen Ausdehnung beträgt und/oder für eine vorgegebene Anregungswellenlänge, eine vorgegebene numerische Apertur des Mikroskopobjektivs, eine vorgegebene konfokale Blendenöffnungsgröße und einen vorgegebenen Brechungsindex eines Immersionsmediums mindestens zwei optischen Schnittdicken des Mikroskops entspricht. Dadurch kann die (erste) diffraktive Optik zur Bereitstellung eines gegenüber dem Stand der Technik zur optischen Trennung ausreichenden axialen Abstands ausgebildet sein.

Vorteilhaft ist das (erste) diffraktive optische Element so ausgebildet, dass Mittelpunkte benachbarter axialer Messvolumina für eine vorgegebene Anregungswellenlänge, eine vorgegebene numerische Apertur des Mikroskopobjektivs, eine vorgegebene konfokale Blendenöffnungsgröße und einen vorgegebenen Brechungsindex eines Immersionsmediums mehr als zwei optische Schnittdicken des Mikroskops voneinander entfernt sind. Allerdings kann durch entsprechende Ausgestaltung des (ersten) diffraktiven Elements bei gegebenem Objektiv eine gewünschte axiale Trennung der Messvolumina durch Einstellung der axialen Aufspaltung mittels der Gitterparameter erzielt werden.

Es ist vorteilhaft, wenn die Optik zum Erweitern der Fokustiefe so ausgebildet ist, dass alle in die Bildebene abgebildeten Messvolumina innerhalb der erweiterten Fokustiefe liegen, wenn also die Beleuchtung mit verlängerter Fokustiefe in der Probe an die durch die Detektion abgedeckten Bereiche angepasst ist. Auf diese Weise kann das Anregungslicht effizient genutzt werden, wodurch die Probe geschont wird. Zu diesem Zweck kann entweder bei gegebenem Gitter in der Detektion die Beleuchtungsoptik so angepasst werden, dass die Messvolumina vollständig ausgeleuchtet sind, oder bei gegebener Lichtverteilung in der Probe der Detektionsstrahlengang so angepasst werden, dass die beleuchteten Bereiche vollständig abgebildet (und detektiert) werden.

Zweckmäßigerweise kann der Strahlvereiniger ein Farbteiler sein, um gestreutes Anregungslicht aus dem Probenlicht abzuspalten. Dadurch gelangt weitgehend nur Fluoreszenzlicht zu den Detektoren. Wenn bei spektraler Detektion die spektrale Auflösung ausreichend hoch ist, kann auf einen Farbteiler verzichtet werden. Die der Anregungswellenlänge entsprechenden spektralen Kanäle werden dann diskriminiert.

Vorzugsweise ist die erste diffraktive Optik in oder zumindest näherungsweise in einer zu einer Pupille des Mikroskopobjektivs konjugierten Ebene angeordnet. Zu diesem Zweck kann das optische System eine oder mehrere Übertragungsoptiken umfassen, die jeweils eine (zusätzliche) konjugierte Pupillenebene bereitstellen.

Zweckmäßigerweise kann das Fluoreszenzrastermikroskop ein Beleuchtungssystem mit einer Lichtquelle zur Emission von Anregungslicht aufweisen. Die Lichtquelle ist dann zweckmäßigerweise zur Einkopplung des Anregungslichts in den Beobachtungsstrahlengang über den Eingang des Strahlvereinigers (in Richtung auf das Mikroskopobjektiv hin) angeordnet, insbesondere mit einer Kollimationsoptik zwischen der Lichtquelle und dem Strahlvereiniger. Es kann sich beispielsweise um einen Laser handeln. Dabei kann das von der Lichtquelle emittierte Anregungslicht der vorteilhaften objektseitigen, axialen Fokusverlängerung unterliegen. Vorzugsweise ergibt sich (durch die Abbildung der Optik zum Erweitern des Fokus und des Objektivs, insbesondere auch weiterer strahlformender Optiken im Beleuchtungsstrahlengang) ein linienförmiger (mit den Messvolumina überlappender) Beleuchtungsfokus, wobei eine Längsrichtung der Linie parallel zur optischen Achse des Mikroskopobjektivs ist. So wird die Probe geschont. Das gelingt beispielsweise mit einer quasi punktförmigen Lichtquelle wie beispielsweise einem Laser. Zur effektiveren Nutzung des Anregungslichts und damit zur Probenschonung kann die Beleuchtungslinie stellenweise eingeschnürt sein, so dass im wesentlichen nur die Messvolumina in der primären und den sekundären Detektionsfokusebenen beleuchtet werden (nicht aber Zwischenräume zwischen den Messvolumina).

Vorteilhafterweise kann das den mikroskopischen Beobachtungsstrahlengang definierende optische System optisch zwischen dem Mikroskopobjektiv und dem Strahlvereiniger eine verstellbare Strahlablenkeinheit (engl. "beam scanning unit") zum sequentiellen Abtasten unterschiedlicher Messvolumina und eine Übertragungsoptik zum Abbilden der Ablenkeinheit in die Pupille des Mikroskopobjektivs aufweisen. Das Abtasten wird so mit geringem Aufwand ermöglicht. Die Ablenkeinheit kann sowohl quasistatische als auch resonante Scanner als auch Galvo-Scanner als auch MEMS-Scanner umfassen. Optisch vorteilhaft ist ein Scanner mit definiertem Drehpunkt, beispielsweise ein MEMSbasierter Scanner wie in US 7,295,726 B1 beschrieben.

Vorzugsweise sind die Detektoren als zweidimensionale Matrix angeordnet und das Mikroskop umfasst eine Steuereinheit, die eingerichtet ist, die Strahlablenkeinheit zu verstellen, mittels der Detektoren Licht aufzunehmen und von den Detektoren ausgegebene Signalwerte zu erfassen, die vorgenannten Schritte mehrfach zu wiederholen und aus den erfassten Signalwerten einen Stapel konfokaler Bilder zu ermitteln.

Die Erfindung kann vorteilhafterweise mit einer Probenmanipulation kombiniert werden. Beispielsweise wird durch eine Weitfeldbeleuchtung oder durch eine gezielte fokussierte Beleuchtung eine Reaktion der Probe angeregt. Anwendungen sind hier beispielsweise FRAP oder das Freisetzen (engl. "uncageing") von Stoffen. Auch mit optogenetischen Verfahren kann die Erfindung kombiniert werden.

Die Detektoren können vorteilhafterweise zur räumlichen Überabtastung (engl. "oversampling") der Punktbildfunktion in mindestens einer der Beugungsordnungen, vorzugsweise in jeder Beugungsordnung angeordnet sein, beispielsweise wie in "Super-resolution in confocal imaging" von Sheppard in "Optik", Band 80 (1988), S. 53, beschrieben. Auf diese Weise kann die Form der PSF und die Intensitätsverteilung innerhalb der PSF ermittelt werden. Damit kann dann ein höheraufgelöstes Bild ermittelt werden. Die Überabtastung gelingt beispielsweise, indem für jede Beugungsordnung eine jeweilige Gruppe von (disjunkten) Detektoren im Beobachtungsstrahlengang angeordnet ist. Ist das optische System zur spektral aufgelösten Detektion eingerichtet, können jeweils mehrere Detektoren der betreffenden Gruppe in demselben Wellenlängenbereich angeordnet sein. Geeignete Detektoren sind hier beispielsweise SPAD-Matrix-Sensoren aufgrund ihrer Empfindlichkeit, Auslesegeschwindigkeit und ihrer Pixelierung.

Die erfindungsgemäße Bildgebung kann auch mit anderen Methoden zur Erhöhung der optischen Auflösung wie z.B. STED oder RESOLFT kombiniert eingesetzt werden. Idealerweise werden zu diesem Zweck zwei Beleuchtungsstrahlengänge bereitgestellt und mittels eines zusätzlichen Strahlvereinigers gekoppelt, so dass Licht aus beiden zur Probe gelangt. Der erste erzeugt wie oben beschrieben einen verlängerten objektseitigen Fokus zur Fluoreszenzanregung (Anregungsstrahl), vorzugsweise mittels eines Besselstrahls. Der zweite Beleuchtungsstrahlengang erzeugt beispielsweise mittels einer Ringblende mit aufgeprägter Spiralphase einen selbstrekonstruierenden annularen Strahl (Besselstrahlen höherer Ordnung mit fehlendem zentralen Maximum), der dann zur Abregung/Unterdrückung der Fluoreszenz außerhalb des Zentrums dient (Abregungsstrahl). Die Wellenlänge des Abregungsstrahls ist vorzugsweise gegen die des Anregungsstrahls rotverschoben. Zu diesem Zweck kann der erste Beleuchtungsstrahlengang eine Lichtquelle aufweisen, die eine kürzere Wellenlänge emittiert als die Lichtquelle des zweiten Beleuchtungsstrahlengangs.

Das optische System kann adaptive Optiken derart umfassen, dass gleichzeitig alle Beleuchtungs- und/oder Detektions-PSF korrigiert werden. Ein rückgekoppelter Modus zur adaptiven Optimierung der Signale in den N Kanälen (Beugungsordnungen) ist hierbei möglich.

Die axial-multifokale Abbildung kann mit einer Abtastung in z-Richtung (längs der optischen Achse erfolgen) kombiniert werden.

Die Fluoreszenzanregung kann sowohl linear (mittels Einphotonenanregung) wie auch nichtlinear (mittels Multiphotonenanregung oder Frequenzvervielfachung - "Second harmonic generation" (SHG), CARS etc.) erfolgen. Die Detektion erfolgt dabei aber zweckmäßigerweise "descanned". Der besondere Vorteil einer nichtlinearen Anregung besteht darin, dass es durch die Quadrierung der Intensität einfacher ist, eine axial verlängerte PSF zu generieren. Weiterhin ist das Verfahren auch mit anderen Methoden der Fluoreszenzbildgebung kombinierbar, beispielsweise mit der "Focal Modulation Microscopy" genannt (Chen et. al in "Optics Express", Band 16, Ausgabe 23, S. 18764).

Die Erfindung kann insbesondere zur schnellen Partikelverfolgung (engl. "particle tracking") vorteilhaft genutzt werden.

Nachfolgend wird die Erfindung anhand von Ausführungsbeispielen näher erläutert.

In den Zeichnungen zeigen:
Fig. 1 ein Mikroskop zur axial-multifokalen Detektion,
Fig. 2 Ausschnitte aus einer ersten und einer zweiten Ausführungsform des optischen Systems zur Definition eines Beobachtungsstrahlengangs und
Fig. 3 Ausschnitte aus einer dritten und einer vierten Ausführungsform des optischen Systems zur Definition eines Beobachtungsstrahlengangs.

In allen Zeichnungen tragen übereinstimmende Teile gleiche Bezugszeichen.

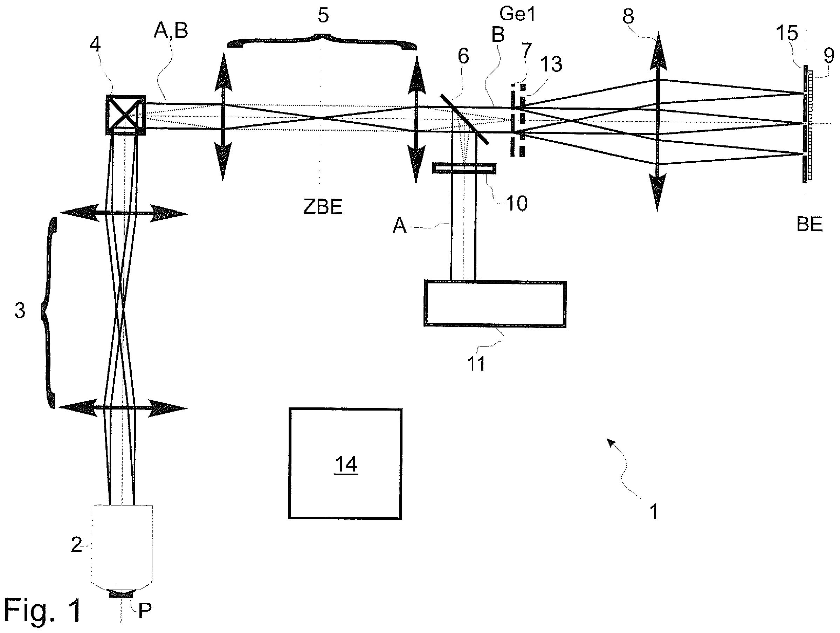

**Fig. 1** zeigt schematisch ein Fluoreszenzrastermikroskop 1 in Form eines Laser-Scanning-Mikroskops (LSM). Hier definiert ein Laser als Lichtquelle 11 als Beleuchtungssystem zusammen mit einem Mikroskopobjektiv 2 einen Beleuchtungsstrahlengang A, welcher eine Phasenmaske 10 enthält und durch einen Strahlteiler 6, beispielsweise einem dichroitischen Strahlteilerwürfel, mit dem Beobachtungsstrahlengang B vereinigt (optisch gekoppelt) wird. Die Phasenmaske 10 ist außerhalb des Beobachtungsstrahlengangs B angeordnet. Ein optisches Übertragungssystem 5 bildet die Ebene der Phasenmaske 10 auf eine Ablenkeinheit 4 ab, welche den Anregungslichtstrahl in x- und y-Richtung auslenken kann. Ein weiteres optisches Übertragungssystem 3 bildet die Ablenkeinheit 4 in die Pupillenebene des Objektivs 2 ab. Das Objektiv 2 fokussiert den Laserstrahl in die Probe P, wobei die laterale Position des Beleuchtungsvolumens von den an der Ablenkeinheit 4 eingestellten Ablenkwinkeln abhängt.

Die axiale Länge des Beleuchtungsvolumens, beispielsweise angebbar durch die volle Halbwertsbreite des axialen Intensitätsprofil seiner PSF, wird durch die Beschaffenheit der Phasenmaske 10 festgelegt und ist gegenüber der des reinen Mikroskopobjektivs 2 (ohne die Phasenmaske 10) in z-Richtung deutlich verlängert, wohingegen die laterale Größe der Beleuchtungs-PSF in x- und y-Richtung näherungsweise identisch ist. Zu diesem Zweck handelt es sich der bei Phasenmaske 10 beispielsweise um eine kubische Phasenmodulationsmaske. Die Ausdehnung des Beleuchtungsvolumens in z-Richtung ist beispielsweise fünffach so groß wie in x-Richtung oder in y-Richtung.

Das entlang des verlängerten Fokusprofils in der Probe P erzeugte Fluoreszenzlicht wird durch das Objektiv 2 im wesentlichen kollimiert und durchläuft die oben beschriebenen Optiken rückwärtig bis zum Strahlteiler 6, der den Beobachtungsstrahlengang B spektral vom Beleuchtungsstrahlengang A trennt. Die Übertragungsoptik 5 transformiert dabei die Zwischenbildebene ZBE, in welcher Informationen in axialer Richtung verteilt vorliegen, in eine erste Gitterebene GE1, welche die Pupillenebene der Übertragungsoptik 5 ist. In der ersten Gitterebene GE1 ist eine erste diffraktive Optik 7 in Form eines zweidimensionalen DOE-Phasengitters angeordnet, welches (2m+1)² Beugungsordnungen (hier beispielsweise m=1) erzeugt und so das einfallende Licht in eine entsprechende Anzahl von Strahlenbündeln aufspaltet. Jeder Beugungsordnung (jedem der Strahlenbündel) prägt das Phasengitter 7 einen konstanten sphärischen Phasenterm auf, wodurch in Abhängigkeit der Wellenfrontkrümmung und damit in Abhängigkeit von der Entfernung der Fluoreszenzemission vom Objektiv 2 eine Refokussierung der Zwischenbildebene ZBE um den jeweiligen Phasenterm, vorteilhafterweise in äquidistanten Schritten, erfolgt. Der ersten diffraktiven Optik 7 ist eine zweite diffraktive Optik 13, beispielsweise ein Gitter oder ein DOE, nachgeschaltet, um die spektrale Dispersion des Phasengitters 7 in GE1 aufzuheben. Die in die Beugungsordnungen aufgespalteten, refokussierten und farbkorrigierten Lichtstrahlenbündel werden durch die Linse 8 als Sammeloptik auf die konfokale Blende 15 in der Bildebene BE abgebildet, hinter der eine Detektormatrix 9 angeordnet ist. Die Detektoren 9ᵢₖ (beispielsweise i=1 ... 128; k=1 ... 128) der Matrix 9 sind beispielsweise SPAD, können aber auch CCD- oder CMOS-Sensoren sein.

Eine Steuereinheit 14 steuert die Ablenkeinheit 4 und die Lichtquelle 11 sowie die Detektoren 9ᵢₖ. Sie ist auch dazu eingerichtet, deren Messwerte entgegenzunehmen und beispielsweise rechnerisch nachzubearbeiten.

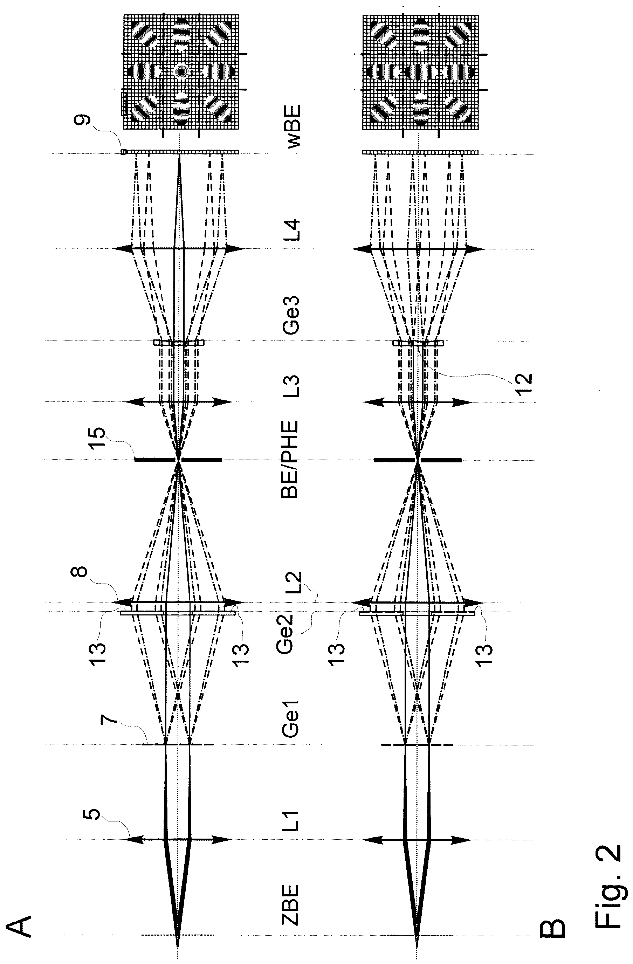

In **Fig. 2A** ist schematisch ein Ausschnitt des Beobachtungsstrahlengangs B im Detail gezeigt. Die mit L1 bezeichnete Linse ist dabei beispielsweise Teil der Übertragungsoptik 5. Nach der refokussierten Aufspaltung an der diffraktiven Optik 7 in der zur Pupillenebene des Objektivs 2 konjugierten ersten Gitterebene GE1 wird die refokussierte Information durch die zweite diffraktive Optik 13 farbkorrigiert, um die spektrale Dispersion des Phasengitters 7 in GE1 zu kompensieren, und durch die Sammeloptik 8 in der Ebene L2 direkt auf den pixelierten Sensor 9 abgebildet. Jede Beugungsordnung bildet somit ein jeweiliges Messvolumen aus einer anderen Ebene der Probe P scharf auf die Detektormatrix 9 ab. Des weiteren wird das Fluoreszenzlicht abgesehen von der nullten Ordnung von jeder Beugungsordnung spektral dispergiert. Die resultierende Lichtverteilung auf der Detektormatrix 9 ist in beiden Teilfig. 2A, 2B schematisch neben dem Strahlengang angegeben.

Idealerweise sind alle nicht relevanten Beugungsordnungen der zweiten diffraktiven Optik 13 in GE2 weitestgehend unterdrückt. Durch die Abbildung durch die Sammeloptik L2 werden nun alle Teilstrahlen jeder Wellenlänge und jeder Ursprungsebene auf einen Punkt fokussiert. In dieser Bildebene BE (zugleich Pinholeebene PHE) wird das Probenlicht nun mittels einer Lochblende 15 quasi-konfokal gefiltert und außerfokales Licht von dem der in der jeweiligen Beugungsordnung betrachteten Messvolumen (Fokusebene) entstammenden Fluoreszenzlicht separiert.

Die Linse in der Ebene L3, die beispielsweise mit der Linse in der Ebene L4 eine weitere Übertragungsoptik bildet, kollimiert die durch die Lochblende 15 in der PHE transmittierten Lichtstrahlen wieder und erzeugt eine weitere Pupillenebene GE3, in der alle Beugungsordnungen wieder voneinander separiert vorliegen. In dieser Ebene GE3 kann wahlweise ein spektral dispergierendes und ordnungsseparierendes Element 12 eingefügt werden, um einerseits die unterschiedlichen Ebenen der ZBE mittels der Linse L4 auf unterschiedliche Positionen der Detektormatrix 9 abzubilden und andererseits die Spektralinformation über die Detektoren 9ᵢₖ zu dispergieren. Das Element 12 ist beispielsweise ein segmentiertes Prisma, das die Beugungsordnungen relativ zueinander spreizt, wobei das Segment in der nullten Beugungsordnung eine planparallele Platte ist. Dadurch ist die nullte Ordnung auf der Detektormatrix 9 nicht spektral aufgelöst. Die acht anderen Beugungsordnungen können spektral aufgelöst detektiert werden, weil jedes Strahlenbündel aufgrund der räumlich-spektralen Aufspaltung über eine betreffende Gruppe von Detektoren 9ᵢₖ (jeweilige Untermenge aller Detektoren) dispergiert ist.

In **Fig. 2B** ist zusätzlich ein spektral dispergierendes Element 12, beispielsweise ein Prisma oder ein Beugungsgitter, im Strahlweg der nullten Ordnung angeordnet, so dass alle Beugungsordnungen räumlich-spektral über eine jeweilige Gruppe von Detektoren 9ᵢₖ aufgespaltet werden. So kann auch für die Probenebene, die durch die nullte Ordnung repräsentiert wird, die Spektralinformation ermittelt werden. Das spektral dispergierende Element 12 ist vorteilhafterweise repositionierbar im Beobachtungsstrahlengang B angeordnet und reversibel wieder zu entfernen.

Die mittels der Detektoren 9ᵢₖ gemessenen Daten sind bereits quasi-konfokal zur primären und den sekundären Fokalebenen. Lediglich die Orientierung der Dispersion muss mittels einer Kalibration eingerechnet werden. Die Kalibrierung des Detektionssystems erfolgt beispielsweise, indem ein einzelnes fluoreszierendes Kügelchen (engl. "bead") axial durch den Beleuchtungs-Fokusbereich des Mikroskops 1 bewegt wird, wobei das Element 12 aus dem Strahlengang der nullten Ordnung entfernt ist. In diesem Fall messen die Detektoren 9ᵢₖ unter der nullten Ordnung die chromatisch ungestörte PSF des optischen Systems. Anhand dieser PSF kann die spektrale Dispersion jeder anderen Beugungsordnung ermittelt werden, da in diesen die identische PSF nur um den jeweiligen (vorgegebenen) Phasenterm korrigiert vorliegen muß. Mit der nun bekannten PSF kann schließlich auch die Dispersion des Elements 12 kalibriert werden.

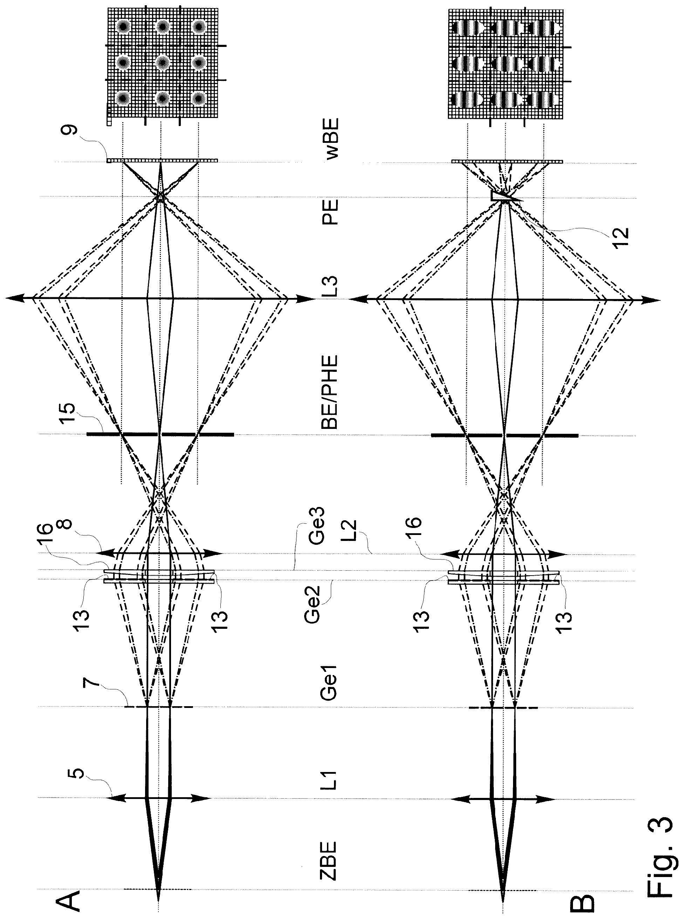

In **Fig. 3A** ist ein Ausschnitt aus einem weiteren optischen System zur Definition eines Beobachtungsstrahlengangs B dargestellt. Im Unterschied zu Abb. 2A ist ein ordnungsseparierendes Element 16, beispielsweise durch unterschiedliche Prismen segmentiert, zwischen dem Korrekturgitter in GE2 und der Sammeloptik L2 in die Gitterebene GE3 eingebracht. Die Summe der spektralen Dispersionen der Elemente in GE 2 und GE 3 sind entgegengesetzt gleich zur spektralen Dispersion der diffraktiven Optik 7 in GE1. Aufgrund des ordnungsseparierenden Elementes 16 werden nun alle Beugungsordnungen des Phasengitters 7 durch die Sammeloptik L2, nachdem sie durch die zweite diffraktive Optik 13 spektral auskorrigiert sind, an separierte Lateralpositionen der PHE abgebildet. Entsprechend ist in der konfokalen Ebene eine konfokale Blende 15 mit einer Matrixanordnung von (2m+1)² Öffnungen angeordnet. Die Linse L3 bildet die PHE schließlich auf die Detektormatrix 9 ab, die in einer weiteren Bildebene wBE angeordnet ist. In der Variante der Fig. 3A erfolgt die Abbildung ohne spektrale Dispersion auf den Detektoren 9.

In **Fig. 3B** ist in der der Sensormatrix 9 vorgelagerten Pupillenebene (PE) ein spektral dispergierendes Element 12 eingebracht, welches von allen Beugungsordnungen durchlaufen wird. Demzufolge ist die Orientierung der spektralen Lichtverteilung auf der Sensormatrix für alle Beugungsordnungen des Phasengitters gleich. Jedoch kann die Spektralauflösung aufgrund der unterschiedlichen Einfallswinkel variieren. Idealerweise ist das Element 12 reversibel positionierbar, so dass zwischen den Anordnungen in Fig. 3A und 3B umgeschaltet werden kann. Dies kann wiederum zur Kalibrierung der spektralen Auflösung genutzt werden.

In alternativen Ausführungsformen weist die konfokale Blende nicht (2m+1)² Öffnungen, sondern beispielsweise nur (2m+1) Öffnungen auf.

### Bezugszeichenliste

- 1: Mikroskop
- 2: Objektiv
- 3: Übertragungsoptik
- 4: Ablenkeinheit
- 5: Übertragungsoptik
- 6: Strahlteiler
- 7: Diffraktive Optik
- 8: Sammeloptik
- 9: Detektormatrix
- 10: Phasenmodulationsmaske
- 11: Lichtquelle (Beleuchtungssystem)
- 12: Spektral dispergierendes Element
- 13: Diffraktive Optik
- 14: Steuereinheit
- 15: Konfokale Blende
- 16: Ordnungsseparierendes Element

- A: Beleuchtungsstrahlengang
- B: Beobachtungsstrahlengang
- P: Probe
- PHE: Pinholebene
- ZBE: Zwischenbildebene
- L1/2/3: Ebenen
- GE1/2/3: Ebenen
- BE: Bildebene
- PE: Pupillenebene
- wBE: weitere Bildebene

## Patentansprüche

1. Konfokales Fluoreszenzrastermikroskop (1) mit einem optischen System, das einen mikroskopischen Beobachtungsstrahlengang (A) von einem Messvolumen bis zu einer Bildebene (BE) definiert und ein Mikroskopobjektiv (2), einen Strahlvereiniger (6) mit einem Eingang zur Ankopplung eines Beleuchtungssystems (11) und eine in der Bildebene (BE) angeordnete Blende (15) umfasst, wobei das optische System zwischen dem Mikroskopobjektiv (2) und dem Strahlvereiniger (6) eine verstellbare Strahlablenkeinheit (4) zum sequentiellen Abtasten unterschiedlicher Messvolumina und eine Übertragungsoptik (3) zum Abbilden der Ablenkeinheit (4) in eine Pupille des Mikroskopobjektivs (2) aufweist, **dadurch gekennzeichnet, dass** das optische System im Beobachtungsstrahlengang (A) zwischen dem Strahlvereiniger (6) und der Bildebene (BE) eine erste diffraktive Optik (7) zur Aufspaltung von Lichtstrahlen in Strahlenbündel längs unterschiedlicher Beugungsordnungen, wobei sie den Lichtstrahlen jeder Beugungsordnung eine von den anderen Beugungsordnungen verschiedene sphärische Phase aufprägt, eine zweite diffraktive Optik (13) zur Kompensation chromatischer Aberrationen der aufgespalteten Strahlenbündel und eine Sammeloptik (8) zur Fokussierung der aufgespalteten Strahlenbündel in die Bildebene (BE) umfasst.

2. Mikroskop (1) nach Anspruch 1, wobei außerhalb des Beobachtungsstrahlengangs (A) vor dem Strahlvereinigereingang zur Ankopplung des Beleuchtungssystems eine Optik (10) zum Erweitern einer Fokustiefe des Mikroskopobjektivs (2) längs dessen optischer Achse angeordnet ist.

3. Mikroskop (1) nach Anspruch 1 oder 2, wobei die diffraktive Optik (7) ein zweidimensionales Phasengitter ist, das vom Mikroskopobjektiv (2) kommende Wellenfronten in (2m+1)² Beugungsordnungen mit m=1,2,3,... über zwei verschiedene Raumrichtungen aufspaltet.

4. Mikroskop (1) nach dem Anspruch 1, 2 oder 3, wobei die Blende (15) eine Öffnung aufweist und die Sammeloptik (8) jedes der aufgespalteten Strahlenbündel der verschiedenen Beugungsordnungen auf diese Öffnung fokussiert.

5. Mikroskop (1) nach Anspruch 1, 2 oder 3, wobei die Blende (15) für jede der aufgespalteten Beugungsordnungen oder zumindest für eine Untermenge der aufgespalteten Beugungsordnungen eine jeweilige Öffnung aufweist und die Sammeloptik (8) jedes der aufgespalteten Strahlenbündel der verschiedenen Beugungsordnungen auf die betreffende Öffnung fokussiert.

6. Mikroskop (1) nach einem der vorhergehenden Ansprüche, wobei das optische System mindestens eine Optik zum Erzeugen einer weiteren Bildebene (wBE) umfasst.

7. Mikroskop (1) nach dem vorhergehenden Anspruch, wobei zwischen der Bildebene (BE) und der weiteren Bildebene (wBE) mindestens ein spektral dispersives Element (12) derart angeordnet ist, dass für jedes der aufgespalteten Strahlenbündel zumindest der von Null verschiedenen Beugungsordnungen verschiedene Wellenlängen auf unterschiedliche Orte der weiteren Bildebene (wBE) fokussiert werden.

8. Mikroskop (1) nach Anspruch 7, wobei das spektral dispersive Element (12) in oder zumindest näherungsweise in einer zur Pupillenebene des Mikroskopobjektivs (2) konjugierten Ebene (PE) angeordnet ist.

9. Mikroskop (1) nach Anspruch 7 oder 8, wobei das spektral dispersive Element (12) zum reversiblen Entfernen aus dem Beobachtungsstrahlengang (A) beweglich gelagert ist.

10. Mikroskop (1) nach einem der Ansprüche 2 oder 3 bis 9, soweit diese auf Anspruch 2 rückbezogen sind, wobei die Optik (10) zum Erzeugen einer erweiterten Fokustiefe eine kubische Phasenmodulationsmaske oder Mittel zum Erzeugen von Besselstrahlen umfasst und/oder zum Unterfüllen der Pupille des Mikroskopobjektivs (2) ausgebildet ist.

11. Mikroskop (1) nach einem der Ansprüche 2 oder 3 bis 10, soweit diese auf Anspruch 2 rückbezogen sind, wobei die Optik (10) zum Erzeugen einer erweiterten Fokustiefe ein Beleuchtungsvolumen erzeugt, dessen axiale Ausdehnung mindestens ein Fünffaches oder mindestens ein Zehnfaches oder mindestens ein Zwanzigfaches seiner lateralen Ausdehnung beträgt und/oder für eine vorgegebene Anregungswellenlänge, eine vorgegebene numerische Apertur des Mikroskopobjektivs (2), eine vorgegebene konfokale Blendenöffnungsgröße und einen vorgegebenen Brechungsindex eines Immersionsmediums mindestens zwei optischen Schnittdicken des Mikroskops (1) entspricht.

12. Mikroskop (1) nach dem vorhergehenden Anspruch, wobei die diffraktive Optik (7) so ausgebildet ist, dass Mittelpunkte benachbarter axialer Messvolumina für eine vorgegebene Anregungswellenlänge, eine vorgegebene numerische Apertur des Mikroskopobjektivs (2), eine vorgegebene konfokale Blendenöffnungsgröße und einen vorgegebenen Brechungsindex eines Immersionsmediums mehr als zwei optische Schnittdicken des Mikroskops (1) voneinander entfernt sind.

13. Mikroskop (1) nach einem der vorhergehenden Ansprüche, wobei die erste diffraktive Optik (7) in oder zumindest näherungsweise in einer zu einer Pupille des Mikroskopobjektivs (2) konjugierten Ebene angeordnet (Ge1) ist.

14. Mikroskop (1) nach einem der vorhergehenden Ansprüche, wobei Detektoren (9) zur räumlichen Überabtastung der Punktbildfunktion in mindestens einer der Beugungsordnungen oder in jeder Beugungsordnung angeordnet sind.

15. Mikroskop (1) nach einem der Ansprüche 2 oder 3 bis 15, soweit diese auf Anspruch 2 rückbezogen sind, wobei die Optik (10) zum Erweitern der Fokustiefe so ausgebildet ist, dass alle in die Bildebene (BE) abgebildeten Messvolumina innerhalb der erweiterten Fokustiefe liegen.

16. Mikroskop (1) nach einem der Ansprüche 2 bis 15, wobei ein Beleuchtungsfokus linienförmig ist, wobei eine Längsrichtung der Linie parallel zur optischen Achse des Mikroskopobjektivs (2) ist.

## Claims

1. Confocal scanning fluorescence microscope (1) with an optical system, which defines a microscopic observation beam path (A) from a measurement volume to an image plane (BE) and comprises a microscope objective (2), a beam combiner (6) with an input for coupling an illumination system (11) and a diaphragm (15) arranged in the image plane (BE), the optical system having between the microscope objective (2) and the beam combiner (6) an adjustable beam deflecting unit (4) for sequentially scanning different measurement volumes and a transfer optics (3) for imaging the deflecting unit (4) into a pupil of the microscope objective (2), **characterized in that** the optical system comprises in the observation beam path (A) between the beam combiner (6) and the image plane (BE) a first diffractive optics (7) for splitting light beams into beam bundles along different orders of diffraction, imparting to the light beams of each order of diffraction a spherical phase that is different from the other orders of diffraction, a second diffractive optics (13) for the compensation of chromatic aberrations of the split beam bundles and a collecting optics (8) for the focusing of the split beam bundles into the image plane (BE).

2. Microscope (1) according to Claim 1, an optics (10) for extending a depth of focus of the microscope objective (2) being arranged along the optical axis of the objective outside the observation beam path (A) ahead of the beam combiner input for the coupling of the illumination system.

3. Microscope (1) according to Claim 1 or 2, the diffractive optics (7) being a two-dimensional phase grating, which splits wavefronts coming from the microscope objective (2) into (2m+1)² orders of diffraction with m=1,2,3,... over two different spatial directions.

4. Microscope (1) according to Claim 1, 2 or 3, the diaphragm (15) having an aperture and the collecting optics (8) focusing each of the split beam bundles of the various orders of diffraction onto this aperture.

5. Microscope (1) according to Claim 1, 2 or 3, the diaphragm (15) having for each of the split orders of diffraction, or at least for a subset of the split orders of diffraction, a respective aperture and the collecting optics (8) focusing each of the split beam bundles of the various orders of diffraction onto the relevant aperture.

6. Microscope (1) according to one of the preceding claims, the optical system comprising at least one optics for producing a further image plane (wBE).

7. Microscope (1) according to the preceding claim, at least one spectrally dispersive element (12) being arranged between the image plane (BE) and the further image plane (wBE) in such a way that, for each of the split beam bundles at least of the orders of diffraction other than zero, different wavelengths are focused onto different locations of the further image plane (wBE).

8. Microscope (1) according to Claim 7, the spectrally dispersive element (12) being arranged in or at least approximately in a plane (PE) conjugate to the pupil plane of the microscope objective (2).

9. Microscope (1) according to Claim 7 or 8, the spectrally dispersive element (12) being movably mounted for reversible removal from the observation beam path (A).

10. Microscope (1) according to one of Claims 2 or 3 to 9, insofar as the latter refer back to Claim 2, the optics (10) for producing an extended depth of focus comprising a cubic phase modulation mask or means for producing Bessel beams and/or being designed for underfilling the pupil of the microscope objective (2).

11. Microscope (1) according to one of Claims 2 or 3 to 10, insofar as the latter refer back to Claim 2, the optics (10) for producing an extended depth of focus producing an illumination volume of which the axial extent is at least five times or at least ten times or at least twenty times its lateral extent and/or, for a predetermined excitation wavelength, a predetermined numerical aperture of the microscope objective (2), a predetermined confocal diaphragm aperture size and a predetermined refractive index of an immersion medium, corresponds to at least two optical section thicknesses of the microscope (1).

12. Microscope (1) according to the preceding claim, the diffractive optics (7) being formed such that midpoints of adjacent axial measurement volumes for a predetermined excitation wavelength, a predetermined numerical aperture of the microscope objective (2), a predetermined confocal diaphragm aperture size and a predetermined refractive index of an immersion medium are more than two optical section thicknesses of the microscope (1) from one another.

13. Microscope (1) according to one of the preceding claims, the first diffractive optics (7) being arranged in or at least approximately in a plane (Ge1) conjugate to a pupil of the microscope objective (2).

14. Microscope (1) according to one of the preceding claims, detectors (9) being arranged for the spatial oversampling of the point spread function in at least one of the orders of diffraction or in each order of diffraction.

15. Microscope (1) according to one of Claims 2 or 3 to 15, insofar as the latter refer back to Claim 2, the optics (10) for extending the depth of focus being formed such that all of the measurement volumes imaged into the image plane (BE) lie within the extended depth of focus.

16. Microscope (1) according to one of Claims 2 to 15, an illumination focus being linear, a longitudinal direction of the line being parallel to the optical axis of the microscope objective (2).

## Revendications

1. Microscope à balayage à fluorescence confocal (1) comprenant un système optique, qui définit un trajet de rayon d'observation (A) microscopique d'un volume de mesure à un plan d'image (BE) et comporte un objectif de microscope (2), un combineur de rayons (6) muni d'une entrée servant à l'accouplement d'un système d'éclairage (11) et un diaphragme (15) disposé dans le plan d'image (BE), le système optique possédant, entre l'objectif de microscope (2) et le combineur de rayons (6), une unité de déflexion de rayon (4) positionnable servant à l'échantillonnage séquentiel de différents volumes de mesure et une optique de transmission (3) servant à représenter l'unité de déflexion (4) dans une pupille de l'objectif de microscope (2), **caractérisé en ce que** le système optique comporte, dans le trajet de rayon d'observation (A) entre le combineur de rayons (6) et le plan d'image (BE), une première optique diffractive (7) destinée à fractionner les rayons lumineux en des faisceaux de rayons le long de différents ordres de diffraction, celle-ci marquant les rayons lumineux de chaque ordre de diffraction d'une phase sphérique différente des autres ordres de diffraction, une deuxième optique diffractive (13) destinée à compenser les aberrations chromatiques des faisceaux de rayons fractionnés et une optique de convergence (8) destinée à focaliser les faisceaux de rayons fractionnés dans le plan d'image (BE).

2. Microscope (1) selon la revendication 1, une optique (10) destinée à étendre une profondeur focale de l'objectif de microscope (2) le long de son axe optique étant disposée en-dehors du trajet de rayon d'observation (A), avant l'entrée du combineur de rayons servant à l'accouplement du système d'éclairage.

3. Microscope (1) selon la revendication 1 ou 2, l'optique diffractive (7) étant un réseau de phase bidimensionnel qui fractionne sur deux directions spéciales différentes les fronts d'onde en provenance de l'objectif de microscope (2) en (2m+1)² ordres de diffraction, avec m = 1, 2, 3,....

4. Microscope (1) selon la revendication 1, 2 ou 3, le diaphragme (15) possédant une ouverture et l'optique de convergence (8) focalisant chacun des faisceaux de rayons fractionnés des différents ordres de diffraction sur cette ouverture.

5. Microscope (1) selon la revendication 1, 2 ou 3, le diaphragme (15) possédant une ouverture respective pour chacun des ordres de diffraction fractionnés ou au moins pour un sous-ensemble des ordres de diffraction fractionnés et l'optique de convergence (8) focalisant chacun des faisceaux de rayons fractionnés des différents ordres de diffraction sur l'ouverture concernée.

6. Microscope (1) selon l'une des revendications précédentes, le système optique comportant au moins une optique destinée à générer un plan d'image supplémentaire (wBE).

7. Microscope (1) selon l'une des revendications précédentes, au moins un élément spectralement dispersif (12) étant disposé entre le plan d'image (BE) et le plan d'image supplémentaire (wBE) de telle sorte que pour chacun des faisceaux de rayons fractionnés, au moins les ordres de diffraction différents de zéro des différentes longueurs d'onde sont focalisés sur des endroits différents du plan d'image supplémentaire (wBE).

8. Microscope (1) selon la revendication 7, l'élément spectralement dispersif (12) étant disposé dans ou au moins approximativement dans un plan (PE) conjugué par rapport au plan de pupille de l'objectif de microscope (2).

9. Microscope (1) selon la revendication 7 ou 8, l'élément spectralement dispersif (12) étant monté mobile pour un retrait réversible hors du trajet de rayon d'observation (A).

10. Microscope (1) selon l'une des revendications 2 ou 3 à 9, dans la mesure où celles-ci se rapportent à la revendication 2, l'optique (10) destinée à étendre une profondeur focale comportant un masque de modulation de phase cubique ou des moyens destinés à générer des rayons de Bessel et/ou étant configurée pour un sous-remplissage de la pupille de l'objectif de microscope (2).

11. Microscope (1) selon l'une des revendications 2 ou 3 à 10, dans la mesure où celles-ci se rapportent à la revendication 2, l'optique (10) destinée à étendre une profondeur focale générant un volume d'éclairage dont l'expansion axiale est égale au moins à un quintuple ou au moins à un décuple ou au moins à un vingtuple de son expansion latérale et/ou correspond à au moins deux épaisseurs de coupe optique du microscope (1) pour une longueur d'onde d'excitation prédéfinie, une ouverture numérique prédéfinie de l'objectif de microscope (2), une grandeur d'ouverture de diaphragme confocale prédéfinie et un indice de réfraction prédéfini d'un milieu d'immersion.

12. Microscope (1) selon la revendication précédente, l'optique diffractive (7) étant configurée de telle sorte que les points centraux de volumes de mesure axiaux voisins sont espacés les uns des autres de plus de deux épaisseurs de coupe optique du microscope (1) pour une longueur d'onde d'excitation prédéfinie, une ouverture numérique prédéfinie de l'objectif de microscope (2), une grandeur d'ouverture de diaphragme confocale prédéfinie et un indice de réfraction prédéfini d'un milieu d'immersion.

13. Microscope (1) selon la revendication précédente, l'optique diffractive (7) étant disposée dans ou au moins approximativement dans un plan conjugué (Ge1) dans une pupille de l'objectif de microscope (2).

14. Microscope (1) selon l'une des revendications précédentes, des détecteurs (9) destinés à un suréchantillonnage de l'espace de la fonction de pixel étant disposés dans au moins l'un des ordres de diffraction ou dans chaque ordre de diffraction.

15. Microscope (1) selon l'une des revendications 2 ou 3 à 15, dans la mesure où celles-ci se rapportent à la revendication 2, l'optique (10) destinée à étendre une profondeur focale étant configurée de telle sorte que tous les volumes de mesure représentés dans le plan d'image (BE) se trouvent à l'intérieur de la profondeur focale étendue.

16. Microscope (1) selon l'une des revendications 2 à 15, un foyer d'éclairage étant en forme de ligne, une direction longitudinale de la ligne étant parallèle à l'axe optique de l'objectif de microscope (2).
